# EUROPEAN PATENT APPLICATION

(11) **EP 4 664 713 A1**
(43) Date of publication of application: **17.12.2025**
(21) Application number: 24763263.1
(22) Date of filing: 01.03.2024
(51) Int. Cl.: H02J 7/00, B60R 16/02, B60N 3/14, H01R 13/631

(54) **ON-BOARD CHARGING CONNECTION DEVICE AND POWER SUPPLY SYSTEM**

(30) Priority: 01.03.2023 CN 202310231105
(71) Applicant: Shenzhen Yinwang Intelligent Technologies Co., Ltd., Shenzhen, Guangdong 518110 (CN)
(72) Inventor: ZHANG, Yuchao, Shenzhen, Guangdong 518129 (CN); JIANG, Haichuan, Shenzhen, Guangdong 518129 (CN)
(74) Representative: Gill Jennings & Every LLP
(86) International application number: PCT/CN2024/079666
(87) International publication number: WO 2024/179583

(57) **Abstract**

A vehicle-mounted charging connection apparatus (400 and 720) and a power supply system are provided. The vehicle-mounted charging connection apparatus (400 and 720) includes: a support portion (411), configured to support an electronic device (120 and 710); and a plugging portion (412), connected and electrically coupled to the support portion (411). The plugging portion (412) is adapted to be at least partially plugged into a power supply base (600) in a vehicle to support the support portion (411), and includes: a plurality of electrical connection terminals (502 to 510) that are symmetrically arranged. The plurality of electrical connection terminals (502 to 510) are arranged to supply power to the electronic device (120) via the plugging portion (412) and the support portion (411) in a first plugging mode and a second plugging mode. The first plugging mode indicates that the plugging portion (412) is plugged into the power supply base (600) in a first plugging posture and is electrically connected to the power supply base (600), the second plugging mode indicates that the plugging portion (412) is plugged into the power supply base (600) in a second plugging posture and is electrically connected to the power supply base (600), and the first plugging posture is different from the second plugging posture.

## Description

### TECHNICAL FIELD

This disclosure relates to the field of charging technologies, and more specifically, to a vehicle-mounted charging connection apparatus.

### BACKGROUND

With popularization of a head unit system, an intelligent cockpit is gradually entering people's life. There are more types of in-vehicle entertainment facilities for a rear-row passenger in addition to a driver. An electronic device like a tablet computer is usually placed on a seat to enrich passenger experience of the rear-row passenger. In some cases, a terminal electronic device like the tablet computer is fastened to the seat via a holder or is directly embedded in the seat.

However, in this case, the electronic device often can be charged only through an additional charging cable, or the electronic device may be fastened and consequently cannot be moved, removed, or replaced. This greatly affects passenger experience. In addition, there is a potential safety problem for the rear-row passenger when the holder and the tablet computer are placed on the seat.

### SUMMARY

In view of the foregoing problems, embodiments of this disclosure are intended to provide a vehicle-mounted charging connection solution, for example, used to plug an electronic device into a power supply base in a vehicle to supply power to the electronic device, and further used to identify connection of the electronic device to provide a corresponding risk prompt for a user.

According to a first aspect of this disclosure, a vehicle-mounted charging connection apparatus is provided. The vehicle-mounted charging connection apparatus includes a support portion for supporting an electronic device and a plugging portion that is connected and electrically coupled to the support portion. The plugging portion is adapted to be at least partially plugged into a power supply base in a vehicle to support the support portion, and includes: a plurality of electrical connection terminals that are symmetrically arranged, where the plurality of electrical connection terminals are arranged to supply power to the electronic device via the plugging portion and the support portion in a first plugging mode and a second plugging mode. The first plugging mode indicates that the plugging portion is plugged into the power supply base in a first plugging posture and is electrically connected to the power supply base, the second plugging mode indicates that the plugging portion is plugged into the power supply base in a second plugging posture and is electrically connected to the power supply base, and the first plugging posture is different from the second plugging posture.

In this way, in embodiments of this disclosure, the vehicle-mounted charging connection apparatus supports forward plugging and reverse plugging into the power supply base, so that the electronic device can be plugged into the power supply base with a high degree of freedom, thereby facilitating charging operability of a user.

In some embodiments of the first aspect, the plurality of electrical connection terminals are arranged in a same row and include: a pair of power terminals, located on outermost sides and electrically connected to each other; a first identification terminal, located in the middle; and a ground terminal and a second identification terminal, respectively located between a corresponding power terminal and the first identification terminal and electrically connected to each other.

In this way, in embodiments of this disclosure, an arrangement manner of the plurality of connection terminals of the vehicle-mounted charging connection apparatus is optimized, so that charging and identification functions are implemented with a minimum quantity of terminals.

In some embodiments of the first aspect, the plurality of electrical connection terminals are arranged in a same row and include: a first identification terminal, located in the middle; a ground terminal and a second identification terminal, located on outermost sides and electrically connected to each other; and a pair of power terminals, respectively located between the corresponding ground terminal and the first identification terminal and between the corresponding second identification terminal and the first identification terminal, and electrically connected to each other.

In this way, position distribution of the plurality of electrical connection terminals can be flexibly configured.

In some embodiments of the first aspect, the plurality of electrical connection terminals include: a pair of power terminals, located on a circumference of a circle at 180° to each other in a first radial direction of the circle in a sectional view, and electrically connected to each other; a first identification terminal, located at a center of the circle; and a ground terminal and a second identification terminal, located on the circumference of the circle at 180° to each other in a second radial direction in the sectional view, and electrically connected to each other, where the second radial direction is orthogonal to the first radial direction.

In this way, position distribution of the plurality of electrical connection terminals can be flexibly configured, so that the vehicle-mounted charging connection apparatus can be applied to a plurality of scenarios by using different structures.

In some embodiments of the first aspect, the support portion is configured to: be fastened to the electronic device through magnetic attraction and supply power to the electronic device in a wireless charging manner.

In this way, convenience of charging the electronic device by the user can be provided.

In some embodiments of the first aspect, the support portion is configured to be rotatable relative to the plugging portion when remaining connected.

In this way, the electronic device fastened to the support portion can interact with the user from a plurality of angles, thereby improving user experience effect.

In some embodiments of the first aspect, the plurality of electrical connection terminals are further arranged to: in the first plugging mode and the second plugging mode, transmit a plugging identification signal to the power supply base via the second identification terminal, where the plugging identification signal indicates that the plugging portion is plugged into the power supply base to supply power to the electronic device.

In this way, plugging of the plugging portion may be independently identified, to perform corresponding warning or limitation via the power supply base.

In some embodiments of the first aspect, the plurality of electrical connection terminals are further arranged to transmit a plugging identification signal to the power supply base or the electronic device via the first identification terminal, where the plugging identification signal indicates that the electronic device is connected, to supply power to the electronic device.

In this way, plugging of the electronic device may be independently identified, to perform corresponding warning or limitation via the power supply base.

In some embodiments of the first aspect, the electronic device includes a first electronic device and a second electronic device, a type of the first electronic device is different from a type of the second electronic device, and the plurality of electrical connection terminals are further arranged to: in response to that the first electronic device is connected to the power supply base via the plugging portion, transmit a first plugging identification signal to the power supply base or the electronic device via the first identification terminal, where the first plugging identification signal indicates that the first electronic device is connected, to supply power to the first electronic device; and in response to that the second electronic device is connected to the power supply base via the plugging portion, transmit a second plugging identification signal to the power supply base or the electronic device via the first identification terminal, where the second plugging identification signal indicates that the second electronic device is connected, to supply power to the second electronic device.

In this way, a plugging identification signal for the electronic device may change based on different types of connected electronic devices, and therefore, warnings or operations for different electronic devices may be performed via the power supply base.

In some embodiments of the first aspect, the first plugging identification signal is configured to have a first value when the first electronic device is connected, the second plugging identification signal is configured to have a second value different from the first value when the second electronic device is connected, and the first electronic device has a load resistance different from that of the second electronic device.

In this way, after various electronic devices having different load resistances are plugged into the power supply base via the vehicle-mounted power supply connection apparatus, a controller can identify various electronic devices based on different level changes, to perform corresponding operations or warnings, thereby meeting diversified requirements of the user.

According to a second aspect of this disclosure, a vehicle-mounted power supply system is provided, including a controller and a power supply base. The power supply base is in communication connection to the controller and includes an accommodating portion, where the accommodating portion is configured to accommodate the plugging portion of the vehicle-mounted charging connection apparatus according to the first aspect of this disclosure, the accommodating portion includes a plurality of electrical connection terminals corresponding to the plurality of electrical connection terminals of the vehicle-mounted charging connection apparatus, the power supply base is configured to supply power to the electronic device via the vehicle-mounted charging connection apparatus in the first plugging mode and the second plugging mode based on control of the controller, the first plugging mode indicates that the plugging portion is plugged into the power supply base in the first plugging posture and is electrically connected to the power supply base, and the second plugging mode indicates that the plugging portion is plugged into the power supply base in the second plugging posture and is electrically connected to the power supply base.

In this way, the controller controls the power supply base to charge a plugged electronic device or produce a warning prompt via the vehicle-mounted charging connection apparatus according to the first aspect of this disclosure.

In some embodiments of the second aspect, the plurality of electrical connection terminals of the power supply base include: a pair of second power terminals, electrically connected to each other and disposed in the accommodating portion in correspondence to the pair of power terminals of the vehicle-mounted charging connection apparatus; a third identification terminal, disposed in the accommodating portion in correspondence to the first identification terminal of the vehicle-mounted charging connection apparatus; and a ground terminal and a fourth identification terminal, respectively disposed in the accommodating portion in correspondence to the ground terminal and the second identification terminal of the vehicle-mounted charging connection apparatus.

In this way, by using a corresponding connection manner between the power supply base and the corresponding electrical connection terminal of the connection apparatus, the vehicle-mounted charging connection apparatus can work normally in both forward plugging and reverse plugging states.

In some embodiments of the second aspect, the controller is further configured to: when the plugging identification signal from the vehicle-mounted charging connection apparatus or the electronic device is received through the third identification terminal and/or the fourth identification terminal, control the plurality of electrical connection terminals of the power supply base to supply power to the electronic device.

In this way, based on the plugging identification signal for the vehicle-mounted charging connection apparatus and the plugging identification signal for the electronic device, the controller may produce different warning instructions when the vehicle-mounted charging connection apparatus is plugged and/or both the vehicle-mounted charging connection apparatus and the electronic device are plugged, to control a corresponding component in the vehicle to perform a corresponding operation.

In some embodiments of the second aspect, the plugging identification signal includes the first plugging identification signal for the first electronic device and the second plugging identification signal for the second electronic device; and the controller controls, based on the first plugging identification signal and the second plugging identification signal via the plurality of electrical connection terminals of the power supply base, the first electronic device and the second electronic device to perform operations.

In this way, the plugging identification signal for the electronic device may change based on different types of connected electronic devices, and therefore, the controller may perform warnings or operations for different electronic devices via the power supply base.

In some embodiments of the second aspect, the controller is configured to: generate a warning instruction in response to that the plugging portion and/or the electronic device are/is plugged into and electrically connected to the power supply base, where the warning instruction indicates warning information or is used to control a motion mode of the vehicle.

In this way, after a holder and the electronic device are connected, a user can be reminded and restricted.

In some embodiments of the second aspect, the vehicle-mounted power supply system further includes: a display, configured to receive a warning signal from the controller to display the warning information; a speaker, configured to receive the warning signal from the controller to make voice information; and a vehicle controller, configured to receive the warning signal from the controller to control the vehicle to travel in a specific mode.

In this way, after the vehicle-mounted power supply connection apparatus and/or the electronic device are/is connected, the controller may perform different warnings or operations via the power supply base.

In some embodiments of the second aspect, the power supply base includes one or more of a vehicle seat, a dashboard, or a vehicle top.

In this way, power supply bases are disposed at different positions inside the vehicle, so that the vehicle-mounted power supply system can be operated in a plurality of scenarios, to meet diversified requirements of the user.

According to a third aspect of this disclosure, a seat is provided. The seat includes a seat back and the power supply base according to the second aspect of this disclosure, where at least a part of the power supply base is mounted in the seat back.

According to a fourth aspect of this disclosure, a vehicle is provided. The vehicle includes a vehicle frame and the seat according to the third aspect of this disclosure, where the seat is movably fastened to the vehicle frame.

### BRIEF DESCRIPTION OF DRAWINGS

The foregoing and other features, advantages, and aspects of embodiments of this disclosure become more apparent with reference to the accompanying drawings and the following detailed descriptions. In the accompanying drawings, same or similar reference numerals indicate same or similar elements.
FIG. 1 is a diagram of an application scenario according to an embodiment of this disclosure;
FIG. 2 is a diagram of an application scenario according to another embodiment of this disclosure;
FIG. 3 is a diagram of an application scenario according to still another embodiment of this disclosure;
FIG. 4a is a perspective view of a vehicle-mounted charging connection apparatus according to an embodiment of this disclosure;
FIG. 4b is a side view of a vehicle-mounted charging connection apparatus according to an embodiment of this disclosure;
FIG. 5a is a distribution diagram of a plurality of electrical connection terminals of a vehicle-mounted charging connection apparatus according to an embodiment of this disclosure;
FIG. 5b is a distribution diagram of a plurality of electrical connection terminals of a vehicle-mounted charging connection apparatus according to another embodiment of this disclosure;
FIG. 6 is a diagram of a power supply base including a plurality of corresponding electrical connection terminals according to an embodiment of this disclosure;
FIG. 7 is a diagram of a vehicle-mounted charging system according to an embodiment of this disclosure;
FIG. 8 is a diagram of an application scenario according to an embodiment of this disclosure; and
FIG. 9 is a diagram of a principle of identifying an electronic device according to an embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implied definitions. The term "and/or" indicates at least one of two items associated with the term. For example, "A and/or B" indicates A, B, or A and B. The following may further include other explicit and implied definitions. In addition, even in a case of describing an example of a specific numerical value, the value may be a numerical value greater than the specific numerical value, or may be a numerical value less than the specific numerical value, except that the value is clearly limited to the numerical value in theory.

It should be understood that in the technical solutions provided in embodiments of this application, some repeated parts may not be described again in the following descriptions of specific embodiments, but it should be considered that these specific embodiments are mutually referenced and may be combined with each other.

As described above, a vehicle-mounted electronic charging system has a problem of inconvenient charging. For example, when a rear-row passenger watches an electronic device or interacts with the electronic device in a vehicle, an additional charging cable is required to charge the electronic device. In addition, there may be some security issues. For example, in some cases, an electronic device like a vehicle-mounted display may be fastened to the back of a front-row seat so that it cannot be moved, removed, or replaced. This greatly affects passenger experience and collision safety of the rear-row passenger. In some other cases, a holder and a tablet computer may be placed on a seat. However, this also causes a potential safety problem for the rear-row passenger, and an additional charging apparatus and charging cable are also required to charge the electronic device. In addition, the holder does not support identification and requires a specific posture to be plugged. For example, the holder does not support bidirectional plugging, to be specific, does not support forward plugging and reverse plugging at the same time.

An embodiment of this disclosure provides a vehicle-mounted charging connection apparatus. The vehicle-mounted charging connection apparatus includes a support portion for supporting an electronic device and a plugging portion that is connected and electrically coupled to the support portion. The plugging portion includes a plurality of electrical connection terminals that are symmetrically arranged, and the plurality of electrical connection terminals are arranged to supply power to the electronic device via the plugging portion and the support portion in a first plugging mode and a second plugging mode. The first plugging mode indicates that the plugging portion is plugged into a power supply base in a first plugging posture and is electrically connected to the power supply base, and the second plugging mode indicates that the plugging portion is plugged into the power supply base in a second plugging posture and is electrically connected to the power supply base.

A seat and the corresponding terminals of the charging connection apparatus are properly disposed on the vehicle-mounted charging connection apparatus, so that a holder can supply power to the electronic device via the power supply base in forward plugging and reverse plugging states. This disclosure further provides a vehicle-mounted charging system, so that identification and charging functions for an electronic device and communication connection to the electronic device can be implemented via a small quantity of pin terminals.

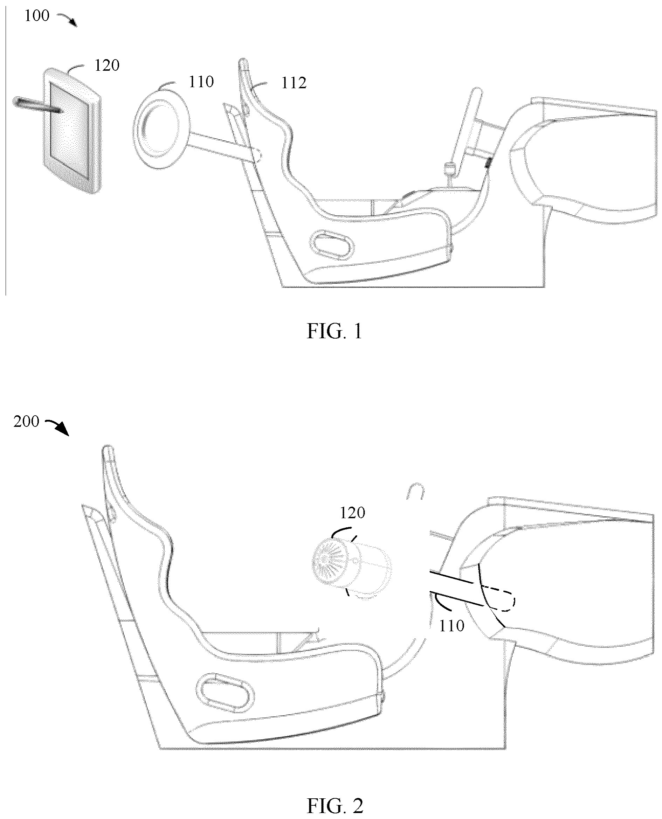

FIG. 1 is a diagram of an application scenario 100 according to an embodiment of this disclosure. As mentioned above, an intelligent cockpit is gradually entering people's life. An electronic device like a tablet computer is usually placed on a seat to enrich passenger experience of a rear-row passenger. In the application scenario 100, an electronic device 120 is placed on a back surface of a backrest of a seat 112 in a vehicle (only partially shown) via a vehicle-mounted power supply connection apparatus 110 in this disclosure, and is in communication connection to a power supply base (refer to the following descriptions) inside the seat 112. In some embodiments, the electronic device 120 may be magnetically attracted to and be in communication connection to the vehicle-mounted power supply connection apparatus 110. In this case, the vehicle-mounted power supply connection apparatus 110 may have a wireless charging function, and is configured to transmit power to the electronic device. Although wireless charging is shown herein, this is merely an example and is not a scope of this disclosure. In some cases, the vehicle-mounted power supply connection apparatus 110 may have a wired charging socket to support wired charging. Optionally, the vehicle-mounted power supply connection apparatus 110 may have a wireless charging component and a wired charging component to support simultaneous wired charging and wireless charging.

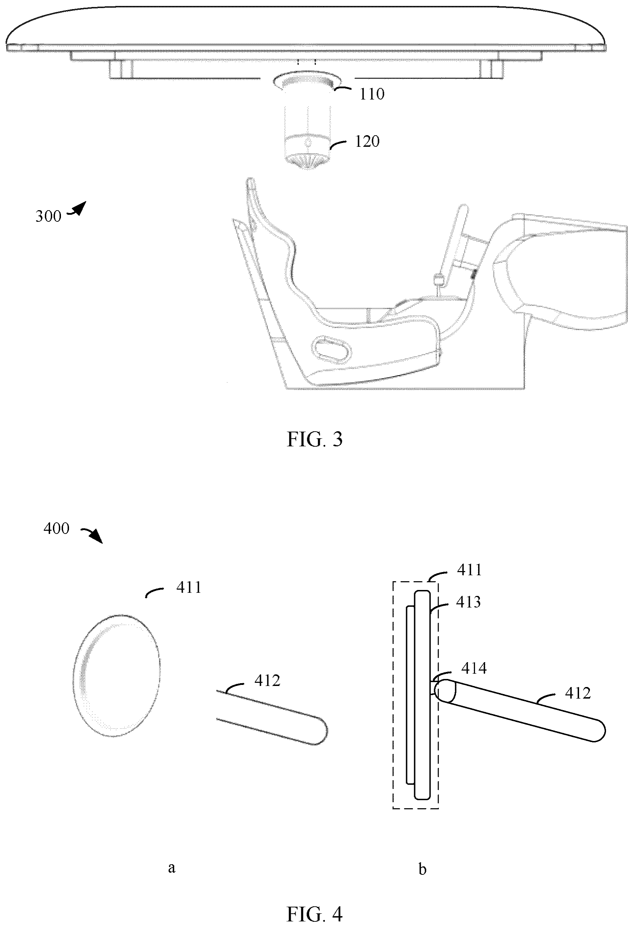

In some other embodiments, the electronic device 120 may alternatively be mechanically connected to the vehicle-mounted power supply connection apparatus 110, and be in communication connection to the vehicle-mounted power supply connection apparatus through a transmission line. For example, the vehicle-mounted power supply connection apparatus 110 may have a mechanical fastening structure like a hook or a fastener. This disclosure imposes no limitation on a connection form. In some embodiments, the electronic device 120 is, for example, a smartphone. Another electronic device is also possible, for example, a tablet computer, a notebook computer, a humidifier, an aroma diffuser, or another vehicle-mounted intelligent terminal device. In some other embodiments, as shown in an application scenario 200 in FIG. 2 and an application scenario 300 in FIG. 3, the electronic device 120 may be alternatively disposed on a dashboard in a front row of the vehicle or a vehicle top via the vehicle-mounted power supply connection apparatus 110. The electronic device 120 may be further disposed at any position in the vehicle. This is not limited in this disclosure. In the embodiments of FIG. 2 and FIG. 3, the electronic device 120 may be, for example, the humidifier or the aroma diffuser.

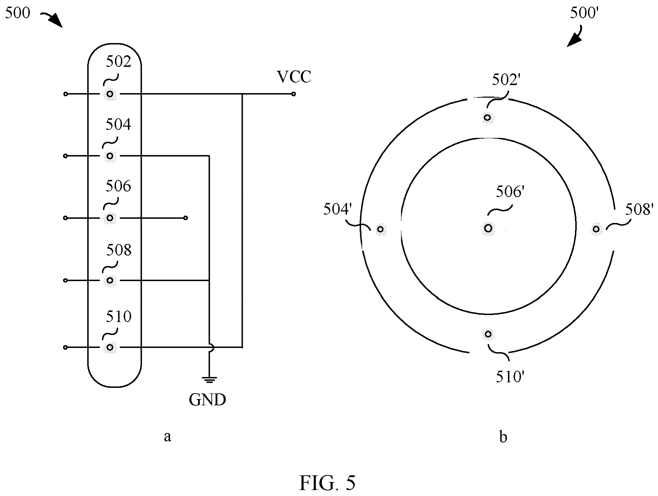

FIG. 4a is a perspective view of a vehicle-mounted charging connection apparatus 400 according to an embodiment of this disclosure. FIG. 4b is a side view of the vehicle-mounted charging connection apparatus 400 according to the embodiment of this disclosure. Refer to FIG. 4b. The vehicle-mounted charging connection apparatus 400 includes a support portion 411 and a plugging portion 412 electrically connected to the support portion. The support portion 411 is configured to: be fastened to the electronic device 120 (shown in FIG. 1) through magnetic attraction and is in wireless communication connection to the electronic device 120. The support portion 411 includes a magnetic pad 413 configured to carry the electronic device 120 and a base 414 that is rotatably connected to one end of the plugging portion 412. The other end of the plugging portion 412 includes a cavity (not shown) capable of accommodating a plurality of electrical connection terminals. The plugging portion 412 is configured to be plugged into an accommodating portion inside the seat 112 shown in FIG. 1 in a forward or reverse plugging posture. The following describes in detail the plurality of electrical connection terminals disposed in the plugging portion with reference to FIG. 5.

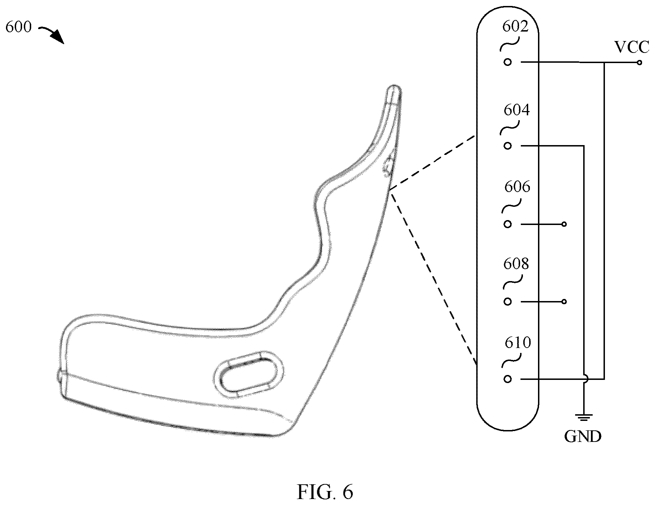

FIG. 5a is a distribution diagram 500 of a plurality of electrical connection terminals of a vehicle-mounted charging connection apparatus according to an embodiment of this disclosure. A plurality of connection terminals 502 to 510 are evenly arranged in a cavity at an end of the plugging portion 412 shown in FIG. 4a in a form of row or column. The plurality of connection terminals include a pair of power terminals 502 and 510 that are symmetrically distributed on outermost sides of the row and electrically connected to each other. A first identification terminal 506 is located in the middle of the row, and is configured to transmit a plugging identification signal to the power supply base (for example, a seat shown in FIG. 6) and/or the electronic device 120. The plugging identification signal indicates that the electronic device 120 is connected for power supply to the electronic device 120. A ground terminal 504 and a second identification terminal 508 are respectively located between a corresponding power terminal and the first identification terminal, and are mutually electrically connected to the ground. In some embodiments, positions of the ground terminal 504 and the second identification terminal 508 may be interchanged. The second identification terminal 508 is configured to transmit a plugging identification signal to the power supply base. The plugging identification signal indicates that the plugging portion 412 is plugged into the power supply base to transmit power to the electronic device 120.

The plurality of electrical connection terminals 502 to 510 are electrically connected to the power supply base via the plugging portion 412 and the support portion 411 shown in FIG. 4a. In some embodiments, when the plugging portion 412 is plugged into the power supply base, a high-level voltage input through the second identification terminal 508 is pulled down to the ground. In this case, connection of the plugging portion is identified by detecting a change of a voltage level. In this case, the ground terminal 504 and the second identification terminal 508 are jointly grounded, so that regardless of whether the plugging portion 412 is plugged into the power supply base in a forward direction or in a reverse direction, the high-level voltage input through the second identification terminal 508 is pulled down to the ground without being affected.

In some embodiments, the ground terminal 504 and the second identification terminal 508 may be symmetrically distributed on the outermost sides of the row and are electrically connected to each other; the first identification terminal 506 is located in the middle of the row; and a pair of power terminals 502 and 510 are respectively located between the corresponding ground terminal 504 and the first identification terminal 506 and between the corresponding second identification terminal 508 and the first identification terminal 506, and are electrically connected to the ground. Similarly, the ground terminal 504 and the second identification terminal 508 are jointly grounded and positions of the ground terminal 504 and the second identification terminal 508 are interchangeable, so that regardless of whether the plugging portion 412 is plugged into the power supply base in a forward direction or in a reverse direction, a high-level voltage input through the second identification terminal 508 is pulled down to the ground without being affected.

FIG. 5b is a distribution diagram 500' of a plurality of electrical connection terminals of a vehicle-mounted charging connection apparatus according to another embodiment of this disclosure. As shown in the figure, a plurality of electrical connection terminals 502' to 510' are arranged in a shape of a circle. A pair of power terminals 502' and 510' are respectively distributed at an upper end and a lower end of a circumference of the circle, a ground terminal 504' and a second identification terminal 508' are respectively located at a left end and a right end of the circumference of the circle, and a first identification terminal 506' is located at a center of the circle. In some embodiments, the pair of power terminals 502' and 510' may be distributed at the left end and the right end of the circumference of the circle, and the ground terminal 504' and the second identification terminal 508' are respectively distributed at the upper end and the lower end of the circumference of the circle. As described above, the plugging portion including the plurality of electrical connection terminals 502' to 510' arranged in the manner shown in FIG. 5b may still normally identify plugging of the vehicle-mounted charging connection apparatus when the plugging portion is plugged in a forward direction or in a reverse direction. A symmetric distribution form of the plurality of electrical connection terminals is not limited in this disclosure. It should be understood that shapes of both the accommodating portion of the power supply base and the cavity of the plugging portion that are configured to accommodate the plurality of electrical connection terminals are not limited in this specification.

FIG. 6 is a diagram of a power supply base 600 including a plurality of electrical connection terminals corresponding to the electrical connection terminals shown in FIG. 5a according to an embodiment of this disclosure. In some embodiments, the power supply base 600 is, for example, an intelligent seat having a battery. Other forms of power supply bases are also possible, for example, the dashboard in front of the front-row seat and the vehicle roof shown in FIG. 2 and FIG. 3. In some other embodiments, the power supply base 600 does not directly supply power to the electronic device 120, but supplies power to the electronic device 120 by electrically connecting to a power supply system of a vehicle.

The power supply base 600 includes an accommodating portion (not shown) in which the plurality of electrical connection terminals corresponding to the plurality of electrical connection terminals that are of the vehicle-mounted charging connection apparatus and that have the distribution forms of 500 and 500' are disposed. The distribution form shown in FIG. 5a is used as an example. The plurality of electrical connection terminals 602 to 610 are evenly arranged in the accommodating portion in a form of row or column in correspondence to the plurality of electrical connection terminals 502 to 510. In some embodiments, a pair of second power terminals 602 and 610 are symmetrically distributed on outermost sides of the row and electrically connected to each other; a third identification terminal 606 is located in the middle of the row; and a ground terminal 604 and a fourth identification terminal 608 are respectively located between the pair of power terminals 602 and 610 and the third identification terminal 606. The ground terminal 604 is electrically connected to the ground.

The fourth identification terminal 608 is configured to transmit a high-level voltage to the second identification terminal 508 of the vehicle-mounted charging connection apparatus when the vehicle-mounted charging connection apparatus is plugged into the power supply base. In this case, the high-level voltage at the fourth identification terminal 608 is pulled down to the ground. A change of a voltage level at the fourth identification terminal 608 is detected to identify connection of the plugging portion. The third identification terminal 606 is configured to transmit a high-level voltage to the first identification terminal 506 of the vehicle-mounted charging connection apparatus when the vehicle-mounted charging connection apparatus is plugged into the power supply base. In this case, the high-level voltage at the third identification terminal 606 is pulled down to the ground. A change of a voltage level at the third identification terminal 606 is detected to identify connection of the electronic device.

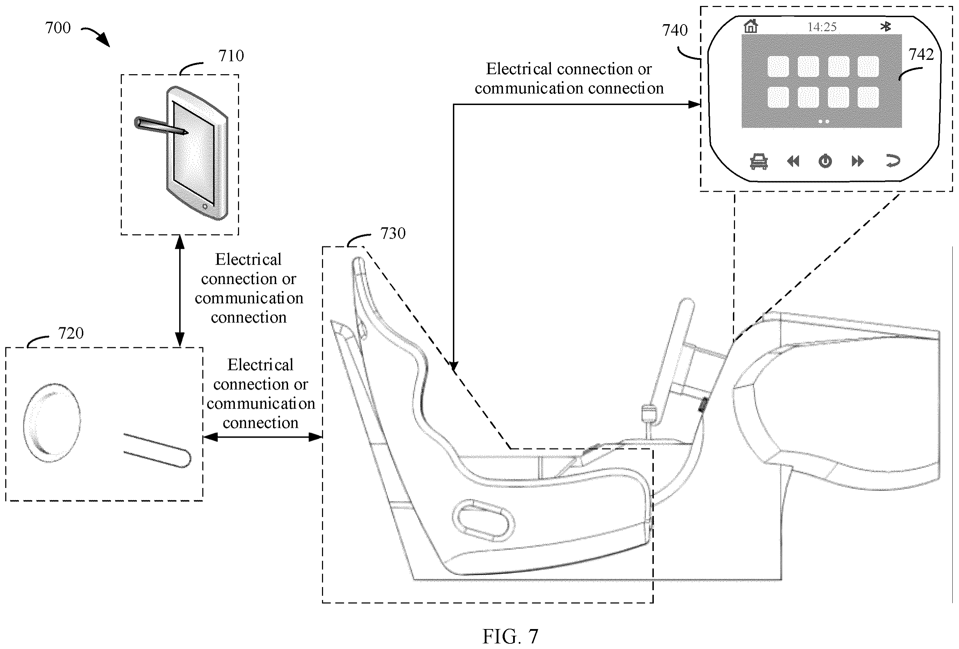

FIG. 7 is a diagram of a vehicle-mounted charging system 700 according to an embodiment of this disclosure. The vehicle-mounted charging system 700 includes an electronic device 710, a vehicle-mounted charging connection apparatus 720 in communication connection to the electronic device 710, a seat 730 having a power supply base in electrical or communication connection to the vehicle-mounted charging connection apparatus 720, and a controller 740 in electrical or communication connection to the power supply base of the seat 730. The controller 740 is configured to control the power supply base to supply power to the electronic device 710 via the vehicle-mounted charging connection apparatus 720.

In some embodiments, the controller 740 is a head unit system having an independent microcontroller unit MCU. In this case, the controller 740 is configured to: when the vehicle-mounted charging connection apparatus 720 is plugged into the power supply base of the seat 730, or when the vehicle-mounted charging connection apparatus 720 and the electronic device 710 are plugged into the power supply base of the seat 730 together, produce a voice warning or warning information displayed on a display 742. For example, when the vehicle-mounted charging connection apparatus 720 and/or the electronic device 710 are/is plugged, the controller 740 provides a pop-up window or a voice prompt, or requires a passenger of a corresponding seat to fasten a seat belt.

In some embodiments, the controller 740 is further configured to: control charging of the electronic device 710 based on a plugging identification signal via the power supply base, or display warning information on the electronic device 710. In some embodiments, the controller 740 may also be a vehicle body controller in electrical or communication connection to the seat 730, and is configured to control a driving status of a vehicle. For example, when the electronic device 710 is plugged, the vehicle is not allowed to enter a motion mode. In another embodiment, the controller 740 may further enable, for connection of the electronic device 710, Bluetooth/Wi-Fi connection of the vehicle for communication. This is not limited in this disclosure.

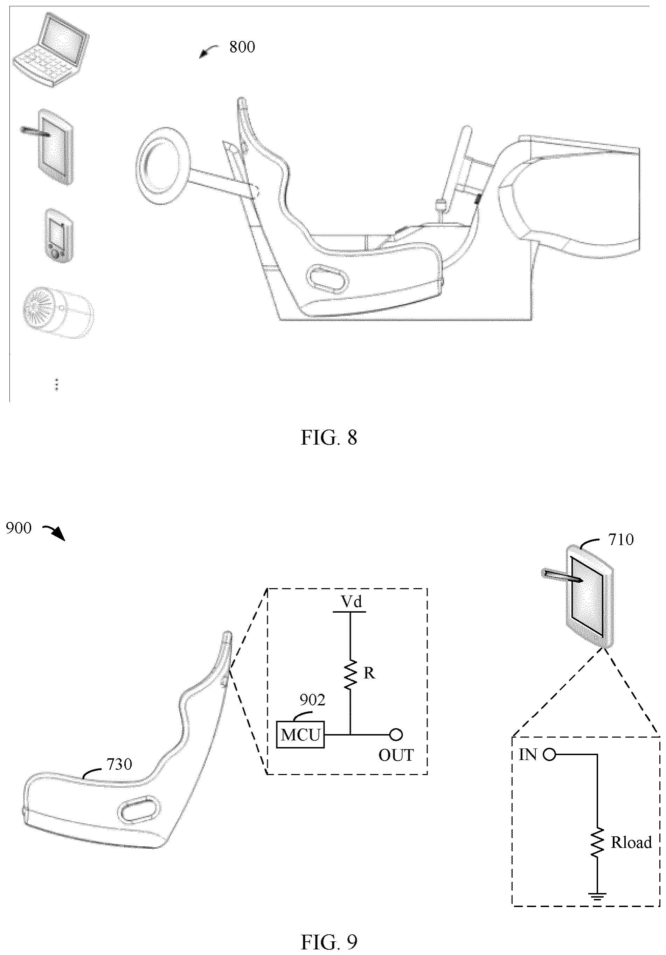

FIG. 8 is a diagram of an application scenario 800 of the vehicle-mounted charging system shown in FIG. 7 according to an embodiment of this disclosure. As described in FIG. 1, the electronic device may be the smartphone, the notebook computer, the humidifier, an air purifier, the aroma diffuser, or another vehicle-mounted intelligent terminal device. In this case, the vehicle-mounted charging system 700 shown in FIG. 7 can intelligently control charging, on, or off of the electronic device based on identification of different types of electronic devices. In some embodiments, when it is identified that the electronic device is the humidifier, the humidifier may be turned on in a timely manner based on a humidity and a temperature condition in a vehicle. In another embodiment, when it is identified that the electronic device is the air purifier, the air purifier may be turned off in a timely manner based on air quality in a vehicle. In still another embodiment, when it is identified that the electronic device is the aroma diffuser, the aroma diffuser may be turned on in a timely manner according to an indication of an in-vehicle gas sensor. The following describes a principle of identifying an electronic device by the vehicle-mounted charging system 700 with reference to FIG. 9.

FIG. 9 is a circuit diagram 900 of the vehicle-mounted charging system shown in FIG. 7 according to an embodiment of this disclosure. FIG. 9 shows only a diagram of corresponding circuits of the seat 730 and the electronic device 710. In some embodiments, the vehicle-mounted charging connection apparatus (720 in FIG. 7) may serve as an electrical connector in which resistance can be ignored, to connect an input terminal IN of the electronic device 710 to an output terminal OUT of the power supply base of the seat 730. The power supply base of the seat 730 has a pull-up resistor between the output terminal OUT and a power supply Vd, so that the power supply base has a fixed high-level voltage at the output terminal OUT. In some embodiments, the power supply base has an independent microcontroller unit MCU 902, to be in communication connection to the electronic device 710. The electronic device 710 has a load resistor Rload between the input terminal IN and the ground. In this case, when different types of electronic devices 710 are connected to the power supply base, the electronic devices 710 serving as loads may serve as resistors having different resistances. When the electronic device 710 is plugged into the power supply base of the seat 730 via the vehicle-mounted charging connection apparatus, the power supply base transmits a high-level voltage to the input terminal IN of the electronic device 710 via the first identification terminal (606 in FIG. 6). In this case, the high-level voltage is pulled down to the ground via the load resistor Rload, and a divided voltage at the load resistor Rload varies with different load resistors Rloads of different electronic devices, as shown in Table 1. Table 1 shows load resistances of different electronic devices.

**Table 1**

| Load resistance (K) | Electronic device# |
|---|---|
| 1K | #1 Aroma diffuser |
| 2K | #2 Humidifier |
| 5K | #3 Smartphone |
| 10K | #4 Tablet computer |

Based on a voltage detected at a load resistor, a type of an electronic device is identified by looking up a correspondence in a lookup table (for example, Table 1) pre-stored in a memory. The memory may be a nonvolatile memory, for example, an electrically programmable ROM (EPROM) or an electrically erasable programmable ROM (EEPROM).

Although the subject matter is described in a language specific to structural features, it should be understood that the subject matter defined in the appended claims is not necessarily limited to the particular features or actions described above. On the contrary, the particular features and actions described above are merely example forms for implementing the claims.

## Claims

1. A vehicle-mounted charging connection apparatus, comprising:
a support portion, configured to support an electronic device; and
a plugging portion, connected and electrically coupled to the support portion, wherein the plugging portion is adapted to be at least partially plugged into a power supply base in a vehicle to support the support portion, and comprises:
a plurality of electrical connection terminals that are symmetrically arranged, wherein the plurality of electrical connection terminals are arranged to supply power to the electronic device via the plugging portion and the support portion in a first plugging mode and a second plugging mode, the first plugging mode indicates that the plugging portion is plugged into the power supply base in a first plugging posture and is electrically connected to the power supply base, the second plugging mode indicates that the plugging portion is plugged into the power supply base in a second plugging posture and is electrically connected to the power supply base, and the first plugging posture is different from the second plugging posture.

2. The vehicle-mounted charging connection apparatus according to claim 1, wherein the plurality of electrical connection terminals are arranged in a same row and comprise:
a pair of power terminals, located on outermost sides and electrically connected to each other;
a first identification terminal, located in the middle; and
a ground terminal and a second identification terminal, respectively located between a corresponding power terminal and the first identification terminal and electrically connected to each other.

3. The vehicle-mounted charging connection apparatus according to claim 1, wherein the plurality of electrical connection terminals are arranged in a same row and comprise:
a first identification terminal, located in the middle;
a ground terminal and a second identification terminal, located on outermost sides and electrically connected to each other; and
a pair of power terminals, respectively located between the corresponding ground terminal and the first identification terminal and between the corresponding second identification terminal and the first identification terminal, and electrically connected to each other.

4. The vehicle-mounted charging connection apparatus according to claim 1, wherein the plurality of electrical connection terminals comprise:
a pair of power terminals, located on a circumference of a circle at 180° to each other in a first radial direction of the circle in a sectional view, and electrically connected to each other;
a first identification terminal, located at a center of the circle; and
a ground terminal and a second identification terminal, located on the circumference of the circle at 180° to each other in a second radial direction in the sectional view, and electrically connected to each other, wherein the second radial direction is orthogonal to the first radial direction.

5. The vehicle-mounted charging connection apparatus according to any one of claims 1 to 4, wherein the support portion is configured to: be fastened to the electronic device through magnetic attraction and supply power to the electronic device in a wireless charging manner.

6. The vehicle-mounted charging connection apparatus according to any one of claims 1 to 5, wherein the support portion is configured to be rotatable relative to the plugging portion when remaining connected.

7. The vehicle-mounted charging connection apparatus according to any one of claims 1 to 6, wherein the plurality of electrical connection terminals are further arranged to: in the first plugging mode and the second plugging mode, transmit a plugging identification signal to the power supply base via the second identification terminal, wherein the plugging identification signal indicates that the plugging portion is plugged into the power supply base, to supply power to the electronic device.

8. The vehicle-mounted charging connection apparatus according to any one of claims 1 to 7, wherein the plurality of electrical connection terminals are further arranged to transmit a plugging identification signal to the power supply base or the electronic device via the first identification terminal, wherein the plugging identification signal indicates that the electronic device is connected, to supply power to the electronic device.

9. The vehicle-mounted charging connection apparatus according to any one of claims 1 to 8, wherein the electronic device comprises a first electronic device and a second electronic device, a type of the first electronic device is different from a type of the second electronic device, and the plurality of electrical connection terminals are further arranged to:
in response to that the first electronic device is connected to the power supply base via the plugging portion, transmit a first plugging identification signal to the power supply base or the electronic device via the first identification terminal, wherein the first plugging identification signal indicates that the first electronic device is connected, to supply power to the first electronic device; and
in response to that the second electronic device is connected to the power supply base via the plugging portion, transmit a second plugging identification signal to the power supply base or the electronic device via the first identification terminal, wherein the second plugging identification signal indicates that the second electronic device is connected, to supply power to the second electronic device.

10. The vehicle-mounted connection apparatus according to claims 1 to 9, wherein the first plugging identification signal is configured to have a first value when the first electronic device is connected, the second plugging identification signal is configured to have a second value different from the first value when the second electronic device is connected, and the first electronic device has a load resistance different from that of the second electronic device.

11. A vehicle-mounted power supply system, comprising:
a controller; and
a power supply base, being in communication connection to the controller and comprising an accommodating portion, wherein the accommodating portion is configured to accommodate the plugging portion of the vehicle-mounted charging connection apparatus according to any one of claims 1 to 10, the accommodating portion comprises a plurality of electrical connection terminals corresponding to the plurality of electrical connection terminals of the vehicle-mounted charging connection apparatus, the power supply base is configured to supply power to the electronic device via the vehicle-mounted charging connection apparatus in the first plugging mode and the second plugging mode based on control of the controller, the first plugging mode indicates that the plugging portion is plugged into the power supply base in the first plugging posture and is electrically connected to the power supply base, and the second plugging mode indicates that the plugging portion is plugged into the power supply base in the second plugging posture and is electrically connected to the power supply base.

12. The vehicle-mounted power supply system according to claim 11, wherein the plurality of electrical connection terminals of the power supply base comprise:
a pair of second power terminals, electrically connected to each other and disposed in the accommodating portion in correspondence to the pair of power terminals of the vehicle-mounted charging connection apparatus;
a third identification terminal, disposed in the accommodating portion in correspondence to the first identification terminal of the vehicle-mounted charging connection apparatus; and
a ground terminal and a fourth identification terminal, respectively disposed in the accommodating portion in correspondence to the ground terminal and the second identification terminal of the vehicle-mounted charging connection apparatus.

13. The vehicle-mounted power supply system according to claim 12, wherein the controller is further configured to: when the plugging identification signal from the vehicle-mounted charging connection apparatus or the electronic device is received through the third identification terminal and/or the fourth identification terminal, control the plurality of electrical connection terminals of the power supply base to supply power to the electronic device.

14. The vehicle-mounted power supply system according to any one of claim 13, wherein the plugging identification signal comprises the first plugging identification signal for the first electronic device and the second plugging identification signal for the second electronic device; and
the controller controls, based on the first plugging identification signal and the second plugging identification signal via the plurality of electrical connection terminals of the power supply base, the first electronic device and the second electronic device to perform operations.

15. The vehicle-mounted power supply system according to claim 10, wherein the controller is configured to:
generate a warning instruction in response to that the plugging portion and/or the electronic device are/is plugged into and electrically connected to the power supply base, wherein the warning instruction indicates warning information or is used to control a motion mode of the vehicle.

16. The vehicle-mounted power supply system according to claim 10, wherein the power supply base comprises one or more of a vehicle seat, a dashboard, or a vehicle top.

17. A seat, comprising a seat back and the power supply base according to any one of claims 11 to 16, wherein at least a part of the power supply base is mounted in the seat back.

18. A vehicle, comprising a vehicle frame and the seat according to claim 17, wherein the seat is movably fastened to the vehicle frame.
